# EUROPÄISCHE PATENTSCHRIFT

(11) **EP 1 785 167 B1**
(45) Veröffentlichungstag und Bekanntmachung des Hinweises auf die Patenterteilung: **17.03.2010**
(21) Anmeldenummer: 06021751.0
(22) Anmeldetag: 17.10.2006
(51) Int. Cl.: A62D 5/00, B01J 20/20, B01J 20/28

(54) **Adsorptionsfiltermaterial mit biologischer und chemischer Schutzfunktion und seine Verwendung**
Adsorbing filter material with a biological and chemical protection function and its use
Materiau filtrant à adsorption ayant une fonction de protection biologique et chimique et son utilisation

(30) Priorität: 11.11.2005 DE 102005054260; 28.11.2005 DE 102005056537
(43) Veröffentlichungstag der Anmeldung: 16.05.2007
(73) Patentinhaber: Blücher GmbH, 40699 Erkrath (DE)
(72) Erfinder: Böhringer, Betram, Dr., 42115 Wuppertal (DE); Kämper, Stefan, 40878 Ratingen (DE)
(74) Vertreter: Gesthuysen, von Rohr & Eggert

(56) Entgegenhaltungen:
- DE-A1- 19 519 869
- DE-U1- 20 220 671
- DE-U1- 20 318 069

## Beschreibung

Die vorliegende Erfindung betrifft ein Adsorptionsfiltermaterial mit biologischer und chemischer Schutzfunktion nach dem Oberbegriff von Anspruch 1 und dessen Verwendung, insbesondere zur Herstellung von Schutzmaterialien aller Art sowie von Filtern und Filtermaterialien aller Art. Des weiteren betrifft die vorliegende Erfindung die unter Verwendung des erfindungsgemäßen Adsorptionsfiltermaterials hergestellten Schutzmaterialien sowie Filter und Filtermaterialien selbst.

Es gibt eine Reihe von Stoffen, die von der Haut aufgenommen werden und zu schweren körperlichen Schäden führen. Als Beispiel sei das blasenziehende Lost (synonym als Gelbkreuz bzw. Senfgas bezeichnet) und das Nervengift Sarin erwähnt. Menschen, die mit solchen Giften in Kontakt kommen können, müssen einen geeigneten Schutzanzug tragen bzw. durch geeignete Schutzmaterialien gegen diese Gifte geschützt werden.

Grundsätzlich gibt es drei Typen von Schutzanzügen: Zum einen die luft- und wasserdampfundurchlässigen Schutzanzüge, die mit einer für biologische und chemische Gifte undurchlässigen Gummischicht ausgestattet sind und sehr schnell zu einem Hitzestau beim Träger führen, weiterhin die luft- und wasserdampfdurchlässigen Schutzanzüge, die den höchsten Tragekomfort bieten, und schließlich Schutzanzüge, die mit einer Membran, welche zwar Wasserdampf, aber nicht biologische und chemische Gifte hindurchläßt, ausgestattet sind. ABC-Schutzkleidung wird also traditionell entweder aus impermeablen Systemen (z. B. Anzügen aus Butylkautschuk oder Anzügen mit Membran) oder permeablen, luftdurchlässigen adsorptiven Filtersystemen insbesondere auf Basis von Aktivkohle (z. B. Pulverkohle, Aktivkohlefaserstoffe oder Kugelkohle etc.) hergestellt.

Während die luftundurchlässigen Membrananzüge zwar zu einem relativ guten Schutz sowohl gegen chemische und biologische Gifte als auch Kampfstoffe führen, besitzen die permeablen, luftdurchlässigen, adsorptiv wirkenden Schutzanzüge zwar eine sehr gute Schutzwirkung in bezug auf chemische Gifte, welche aber oftmals nur unzureichend im Hinblick auf biologische Schadstoffe ist.

Daher werden die permeablen, adsorptiven Filtersysteme, insbesondere auf Basis von Aktivkohle, oft mit einer katalytisch aktiven Komponente ausgerüstet, indem die Aktivkohle mit einem biozid bzw. biostatisch wirkenden Katalysator, insbesondere auf Basis von Metallen oder Metallverbindungen, imprägniert wird.

Ein derartiges Schutzmaterial ist beispielsweise in der DE 195 19 869 A1 beschrieben, welche ein mehrlagiges, textiles, gasdurchlässiges Filtermaterial mit einer Adsorptionsschicht auf Basis von Aktivkohle, insbesondere in Form von carbonisierten Fasern, enthält, die mit einem Katalysator aus der Gruppe von Kupfer, Cadmium, Platin, Palladium, Quecksilber und Zink in Mengen von 0,05 bis 12 Gew.-%, bezogen auf das Aktivkohlematerial, imprägniert ist. Nachteilig bei diesem Schutzmaterial bzw. Filtersystem ist die Tatsache, daß durch die Imprägnierung mit dem Katalysator ein Teil der Adsorptionskapazität, welche für die Adsorption und somit das Unschädlichmachen von chemischen Schadstoffen benötigt wird, verlorengeht. Durch den Imprägnierprozeß wird somit die Leistungsfähigkeit der eingesetzten Aktivkohle nachteilig beeinträchtigt. Des weiteren ist das Imprägnieren des Aktivkohlematerials relativ aufwendig und erschwert oftmals den Herstellprozeß für die Aktivkohle, insbesondere den Aktivierungsvorgang. Außerdem wird durch die Imprägnierung mit dem Katalysator nicht immer die gewünschte Wirksamkeit gegenüber biologischen Schadstoffen bzw. Mikroorganismen erreicht. Schließlich benötigt der Imprägnierprozeß relativ große Mengen des Katalysatormetalls.

Es ist daher die Aufgabe der vorliegenden Erfindung, ein Adsorptionsfiltermaterial bzw. ein Schutzmaterial bereitzustellen, welches die zuvor geschilderten Nachteile des Standes des Technik zumindest weitgehend vermeidet oder aber wenigstens abschwächt. Insbesondere sollte sich ein solches Adsorptionsfilter- bzw. Schutzmaterial insbesondere für die Herstellung von ABC-Schutzmaterialien aller Art, wie z. B. ABC-Schutzbekleidung und dergleichen, sowie von Filter und Filtermaterialien eignen.

Eine weitere Aufgabe der vorliegenden Erfindung liegt darin, ein permeables, insbesondere gas- bzw. luftdurchlässiges Adsorptionsfilter- bzw. Schutzmaterial bereitzustellen, welches sowohl in bezug auf chemische Gifte bzw. Schadstoffe, insbesondere chemische Kampfstoffe, als auch in bezug auf biologische Schadstoffe (z. B. Mikroorganismen, wie Bakterien, Viren und Pilze), insbesondere biologische Kampfstoffe, wirksam ist.

Das zuvor geschilderte Problem wird im Rahmen der vorliegenden Erfindung durch ein Adsorptionsfiltermaterial nach Anspruch 1 gelöst. Weitere, vorteilhafte Ausgestaltungen des erfindungsgemäßen Adsorptionsfiltermaterials sind Gegenstand der diesbezüglichen Unteransprüche.

Weiterer Gegenstand der vorliegenden Erfindung sind die Verwendung des erfindungsgemäßen Adsorptionsfiltermaterials zur Herstellung von Schutzmaterialien aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise für den ABC-Einsatz, sowie die auf diese Weise hergestellten Schutzmaterialien der vorgenannten Art selbst.

Schließlich sind ein weiterer Gegenstand der vorliegenden Erfindung die Verwendung des erfindungsgemäßen Adsorptionsfiltermaterials zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich, sowie die auf diese Weise hergestellten Filter und Filtermaterialien der vorgenannten Art selbst.

Gegenstand der vorliegenden Erfindung - gemäß einem ersten Aspekt der vorliegenden Erfindung - ist somit ein Adsorptionsfiltermaterial mit biologischer und chemischer Schutzfunktion, insbesondere mit Schutzfunktion gegenüber chemischen wie biologischen Giften und Schadstoffen, wie chemischen und biologischen Kampfstoffen, wobei das Adsorptionsfiltermaterial einen mehrschichtigen Aufbau mit einer ersten äußeren Trägerschicht und einer zweiten äußeren Trägerschicht und einer zwischen den beiden Trägerschichten angeordneten Adsorptionsschicht aufweist, wobei das Adsorptionsfiltermaterial außerdem mindestens eine katalytisch aktive Komponente umfaßt, wobei die erste äußere Trägerschicht und/oder die zweite äußere Trägerschicht, vorzugsweise die erste äußere Trägerschicht oder die zweite äußere Trägerschicht, mit der katalytisch aktiven Komponente beaufschlagt ist bzw. sind. Erfindungsgemäß ist also mindestens eine der beiden äußeren Trägerschichten, vorzugsweise nur eine der beiden äußeren Trägerschichten, mit der katalytisch aktiven Komponente beaufschlagt.

Die grundlegende Idee der vorliegenden Erfindung besteht also darin, Adsorptionsfiltermaterialien mit mehrschichtigem Aufbau dadurch mit einer erhöhten bzw. verbesserten Schutzfunktion auch gegenüber biologischen Schadstoffen, insbesondere biologischen Kampfstoffen, auszurüsten, daß eine katalytisch aktive Komponente vorgesehen ist, wobei - im Unterschied zum Stand der Technik - die katalytisch aktive Komponente Bestandteil der Trägerschicht(en) ist.

Aufgrund der Tatsache, daß die katalytisch aktive Komponente nicht Bestandteil der Adsorptionsschicht, sondern Bestandteil der Trägerschicht ist, wird eine Vielzahl von Vorteilen erreicht: Zum einen wird ein aufwendiges Imprägnieren der Adsorptionsschicht, insbesondere der Aktivkohle, vermieden. Infolgedessen wird die Adsorptionskapazität der Adsorptionsschicht, insbesondere der Aktivkohle, nicht durch die katalytisch aktive Komponente beeinträchtigt bzw. reduziert. Zudem wird der Herstellprozeß für die Adsorptionsschicht, insbesondere die Aktivkohleherstellung, nicht durch die Anwesenheit der katalytisch aktiven Komponente beeinträchtigt. Des weiteren ist es herstellungstechnisch einfacher, die Beaufschlagung der Trägerschicht(en) mit der katalytisch aktiven Komponente in die Produktionslinie des gesamten Herstellprozesses für das Adsorptionsfiltermaterial einzureihen, da die Belegung mit der katalytisch aktiven Komponente unabhängig von der Herstellung der Adsorptionsschicht, insbesondere unabhängig von der Aktivkohleherstellung, erfolgt.

Zudem haben Untersuchungen der Anmelderin überraschenderweise gezeigt, daß die Schutzfunktion des erfindungsgemäßen Adsorptionsfiltermaterials, bei dem die katalytisch aktive Komponente nicht in der Adsorptionsschicht, sondern in einer anderen Schicht (nämlich erfindungsgemäß in der Trägerschicht) angeordnet ist, die Schutzeffizienz - im Vergleich zu herkömmlichen Adsorptionsfiltermaterialien des Standes der Technik, bei denen die Adsorptionsschicht selbst mit der katalytisch aktiven Komponente imprägniert ist - deutlich verbessert ist: In den von der Anmelderin durchgeführten Versuchen nach den diesbezüglich einschlägigen Vorschriften bzw. Normen wurde beobachtet, daß die durchgebrochene Menge von chemischen und biologischen Giften und Schadstoffen bei dem Adsorptionsfiltermaterial nach der vorliegenden Erfindung - im Vergleich zu herkömmlichen Schutzmaterialien, bei denen die Adsorptionsschicht mit der katalytisch aktiven Komponente imprägniert ist - deutlich verringert ist (und dies bei vergleichbaren Katalysatorsystemen und vergleichbaren Katalysatormengen). Denn im Rahmen des erfindungsgemäßen Adsorptionsfiltermaterials müssen die unschädlich zu machenden Gifte bzw. Schadstoffe sozusagen eine doppelte Barriere in Form von zwei getrennten Schichten durchströmen, nämlich zum einen eine Schicht mit einer katalytisch aktiven Komponente, die insbesondere gegenüber biologischen Schadstoffen (z. B. Mikroorganismen, wie Bakterien, Viren oder Pilzen und dergleichen) wirkt, aber unter Umständen auch bereits einen Teil der chemischen Schadstoffe bzw. Gifte katalytisch unschädlich macht oder aber zersetzen kann und zum anderen eine Adsorptionsschicht zur Adsorption bzw. zum Unschädlichmachen überwiegend von chemischen Giften bzw. Schadstoffen, aber gegebenenfalls auch einem Teil der biologische Giftstoffe. Dadurch, daß erfindungsgemäß die katalytisch aktive Komponente einerseits und die adsorptive Komponente andererseits in separaten Schichten angeordnet sind, wird zudem die Verweildauer bzw. Kontaktzeit mit den unschädlich zu machenden Giften bzw. Schadstoffen gegenüber herkömmlichen Adsorptionsfiltermaterialien, bei denen die katalytisch aktive Komponente in der Adsorptionsschicht selbst angeordnet ist, beträchtlich erhöht, so daß die Schutzeffizienz erhöht und die Anzahl der Durchbrüche verringert wird. Außerdem werden geringere Mengen an katalytisch aktiver Komponente benötigt.

Das erfindungsgemäße Schutzmaterial weist somit einen effizienten Schutz sowohl gegenüber chemischen Giften bzw. Schadstoffen, insbesondere chemischen Kampfstoffen ("C-Waffen", wie Sarin, Lost, Soman etc.), als auch gegenüber biologischen Giften bzw. Schadstoffen ("B-Waffen", wie Viren, Bakterien, Pilze, Mikroorganismen etc., so z. B. Anthrax bzw. Milzbrand, Pocken, Ebola, Pest, Marburg-Virus etc.) auf.

Die biologische Schutzfunktion des erfindungsgemäßen Adsorptionsfiltermaterials ist vergleichbar mit Membransystemen, jedoch ist aufgrund der Gas-, insbesondere Luftdurchlässigkeit, bzw. Permeabilität des erfindungsgemäßen Adsorptionsfiltermaterials der Tragekomfort bei der Verarbeitung zu ABC-Schutzanzügen gegenüber Membrananzügen deutlich erhöht. Der entscheidende Vorteil des erfindungsgemäßen Adsorptionsfiltermaterials gegenüber Membransystemen besteht aber darin, daß durch das erfindungsgemäße Adsorptionsfiltermaterial die biologischen Schadstoffe unschädlich gemacht bzw. zersetzt werden, so daß nach dem Gebrauch des erfindungsgemäßen Adsorptionsfiltermaterials keine schädlichen Schadstoffe an dem Material verbleiben, wohingegen bei Membransystemen des Standes der Technik - da diese nur eine Barrierefunktion haben - die Schadstoffe an der Oberfläche verbleiben und nach wie vor ein Kontaminations- bzw. Gefährdungsrisiko bilden (z. B. beim Ablegen der Schutzbekleidung). Auch ist das erfindungsgemäße Adsorptionsfiltermaterial infolgedessen ohne weiteres mehrfach einsetzbar, ohne daß es dekontaminiert werden muß, da es sozusagen selbstdekontaminierend ausgebildet ist.

Im Vergleich mit Adsorptionsfiltermaterialien des Standes der Technik, bei denen die Aktivkohle selbst mit der katalytisch aktiven Komponente imprägniert ist, ist die Schutzfunktion des erfindungsgemäßen Adsorptionsfiltermaterials deutlich erhöht - was sich insbesondere in der geringeren Anzahl an Durchbruchraten bei Messungen durch die Anmelderin gezeigt hat, und dies selbst bei größeren Mengen an einwirkenden chemischen und biologischen Giften und Schadstoffen und selbst über einen längeren Zeitraum.

Insgesamt sind mit der Konzeption des erfindungsgemäßen Adsorptionsfiltermaterials eine Vielzahl von Vorteilen verbunden, von denen die vorgenannten Vorteile nur beispielhaft erwähnt seien.

Wie zuvor beschrieben, besitzt das erfindungsgemäße Adsorptionsfiltermaterial einen sandwichartigen Aufbau, wobei die Adsorptionsschicht sozusagen als Kernschicht zwischen zwei äußeren Trägerschichten bzw. Trägerlagen angeordnet ist.

Wie zuvor beschrieben, kann grundsätzlich sowohl die erste äußere Trägerschicht als auch die zweite äußere Trägerschicht mit der katalytisch aktiven Komponente beaufschlagt sein (d. h. mindestens eine der beiden äußeren Schichten mit der katalytisch aktiven Komponente beaufschlagt sein). Erfindungsgemäß bevorzugt ist jedoch nur eine der beiden äußeren Trägerschichten mit der katalytisch aktiven Komponente beaufschlagt, wobei vorzugsweise die im Gebrauchszustand der Schadstoffseite zugewandte Trägerschicht mit der katalytisch aktiven Komponente beaufschlagt ist. Auf diese Weise durchströmt im Gebrauchszustand der schadstoffhaltige Luftstrom zunächst die Trägerschicht mit der katalytisch aktiven Komponente, dann erst die Adsorptionsschicht und schließlich die zweite Trägerschicht. Bei der weniger bevorzugten Ausführungsform, der zufolge beide Trägerschichten mit einer katalytisch aktiven Komponente beaufschlagt sind, können beispielsweise unterschiedliche katalytisch aktive Komponenten für die erste äußere und die zweite äußere Trägerschicht vorgesehen sein. Alle nachfolgenden Erläuterungen beziehen sich jedoch auf beide Ausführungsformen, d. h. sowohl auf die weniger bevorzugte Ausführungsform, wonach beide Trägerschichten mit der katalytisch aktiven Komponente beaufschlagt sind, als auch auf die Ausführungsform, wonach nur eine der beiden Trägerschichten mit der katalytisch aktiven Komponente beaufschlagt ist.

Was die erfindungsgemäß vorgesehene Adsorptionsschicht anbelangt, so kann diese an der ersten äußeren Trägerschicht und/oder an der zweiten äußeren Trägerschicht befestigt sein, insbesondere mittels Verkleben (z. B. durch diskontinuierliche, insbesondere punktrasterförmige Verklebung). Dies bedeutet, daß die Adsorptionsschicht vorteilhafterweise mit der ersten äußeren Trägerschicht und/oder mit der zweiten äußeren Trägerschicht, vorzugsweise mit der ersten äußeren Trägerschicht und mit der zweiten äußeren Trägerschicht verbunden, insbesondere verklebt, ist. Grundsätzlich ist es aber auch möglich die einzelnen Schichten teilweise oder sämtlich nur lose bzw. zumindest im wesentlichen unverbunden übereinander anzuordnen.

Gemäß einer erfindungsgemäß bevorzugten Ausführungsform ist die Adsorptionsschicht auf Basis von Aktivkohle ausgebildet, d. h. die adsorptionsfähige Schicht weist Aktivkohle auf oder besteht hieraus. Die Aktivkohle kann dabei in Form von Aktivkohleteilchen und/oder Aktivkohlefasern vorliegen.

Beispielsweise kann die Adsorptionsschicht diskrete Aktivkohleteilchen, vorzugsweise in Kornform ("Kornkohle") oder Kugelform ("Kugelkohle"), umfassen oder hieraus bestehen. Insbesondere beträgt in diesem Fall der mittlere Durchmesser der Aktivkohleteilchen < 1,0 mm, vorzugsweise < 0,8 mm, bevorzugt < 0,6 mm. Dabei beträgt der mittlere Durchmesser der Aktivkohleteilchen insbesondere mindestens 0,1 mm. Bei dieser Ausführungsform können die Aktivkohleteilchen in einer Menge von 10 bis 500 g/m², insbesondere 25 bis 400 g/m², vorzugsweise 50 bis 300 g/m², bevorzugt 25 bis 275 g/m², besonders bevorzugt 100 bis 250 g/m², ganz besonders bevorzugt 125 bis 200 g/m², eingesetzt werden. Insbesondere werden solche Aktivkohleteilchen eingesetzt, die - bezogen auf ein einzelnes Aktivkohleteilchen, insbesondere Aktivkohlekörnchen bzw. -kügelchen - einen Berstendruck von 5 Newton, insbesondere mindestens 10 Newton, und/oder bis zu 20 Newton aufweisen.

Alternativ hierzu kann die Adsorptionsschicht aber auch aus Aktivkohlefasern, insbesondere in Form eines Aktivkohleflächengebildes, gebildet sein oder Aktivkohlefasern umfassen. Bei dieser Ausführungsform werden insbesondere Aktivkohleflächengebilde mit Flächengewichten von 10 bis 300 g/m², insbesondere 20 bis 200 g/m², vorzugsweise 30 bis 150 g/m², eingesetzt. Erfindungsgemäß geeignete Aktivkohlefaserflächengebilde sind beispielsweise Aktivkohlefasergewebe, -gewirke, -gelege oder -verbundstoffe, insbesondere auf Basis von carbonisierter und aktivierter Cellulose und/oder auf Basis von carbonisiertem und aktiviertem Acrylnitril.

Gleichermaßen ist es möglich, für die Ausbildung der Adsorptionsschicht Aktivkohleteilchen einerseits und Aktivkohlefasern andererseits miteinander zu kombinieren.

Erfindungsgemäß ist es bevorzugt, wenn die zur Ausbildung der Adsorptionsschicht eingesetzte Aktivkohle (d. h. Aktivkohlepartikel oder Aktivkohlefasern) eine innere Oberfläche (BET) von mindestens 800 m²/g, insbesondere von mindestens 900 m²/g, vorzugsweise von mindestens 1.000 m²/g, bevorzugt im Bereich von 800 bis 2.500 m²/g, aufweist.

Des weiteren kann es vorgesehen sein, daß das erfindungsgemäße Adsorptionsfiltermaterial außerdem mindestens eine Oberschicht aufweisen kann, wobei diese üblicherweise auf der der Adsorptionsschicht abgewandten Seite der ersten oder zweiten äußeren Trägerschicht angeordnet werden kann, vorzugsweise hiermit verbunden wird. Üblicherweise werden als Oberschichtmaterialien textile Flächengebilde, insbesondere Gewebe, Gewirke, Gestricke, Gelege, Textilverbundstoffe (z. B. Vliese) oder Non-Woven eingesetzt. Üblicherweise wird die Oberschicht derart angeordnet, daß sie im Gebrauchszustand des erfindungsgemäßen Adsorptionsfiltermaterials zu der Seite der einwirkenden Gift- bzw. Schadstoffe hinweist, d. h. auf derjenigen Trägerschicht angeordnet wird, die im Gebrauchszustand der Schadstoffseite zugewandt ist. Üblicherweise wird die Oberschicht oleo- und/oder hydrophobiert, vorzugsweise oleo- und hydrophobiert ist, insbesondere um auch einen gewissen Aerosolschutz zu erreichen und im Falle des Auftreffens größerer Tropfen von Schad- und Giftstoffen diese auf der Oberfläche des erfindungsgemäßen Adsorptionsfiltermaterials zu verteilen; für diesen Zweck geeignete Oleo- bzw. Hydrophobierungsmittel sind dem Fachmann hinlänglich bekannt (z. B. Fluorpolymere, wie Fluorcarbonharze). Des weiteren kann die Oberschicht mit einem Flammschutz (z. B. Phosphorsäureester) ausgerüstet sein. Des weiteren kann die Oberschicht auch antistatisch ausgerüstet sein. Weiterhin kann die Oberschicht auch mit Infrarotreflexionseigenschaften (IR-Reflexionseigenschaften) ausgerüstet sein. Schließlich kann die Oberschicht an ihrer den Schadstoffen zugewandten Seite (d. h. im Gebrauchszustand auf der Außenseite) auch mit einer Tarnbedruckung, insbesondere bei der Herstellung von ABC-Schutzanzügen, versehen sein.

Gemäß einer besonders bevorzugten Ausführungsform weist das erfindungsgemäße Adsorptionsfiltermaterial folgenden Aufbau auf: Oberschicht/erste äußere Trägerschicht mit katalytisch aktiver Komponente/Adsorptionsschicht/zweite äußere Trägerschicht. Dabei wird im Gebrauchszustand des erfindungsgemäßen Adsorptionsfiltermaterials die Oberschicht im allgemeinen der Schadstoffseite zugewandt. Des weiteren ist es bei dieser Ausführungsform auch möglich, auch die zweite äußere Trägerschicht mit einer katalytisch aktiven Komponente zu imprägnieren.

Neben den vorgenannten Schichten kann das erfindungsgemäße Adsorptionsfiltermaterial auch noch andere Schichten enthalten, insbesondere textile Lagen. Diese können oberhalb, unterhalb oder zwischen den vorgenannten Schichten angeordnet sein.

Was die erfindungsgemäß eingesetzte katalytische Komponente anbelangt, so handelt es sich hierbei insbesondere um eine katalytisch aktiver Komponente mit biostatischer und/oder biozider Wirkung, insbesondere mit bakteriostatischer oder bakterizider und/oder virustatischer oder viruzider und/oder fungistatischer oder fungizider Wirkung. Üblicherweise ist die katalytisch aktive Komponente auf Basis eines Metalls oder einer Metallverbindung, insbesondere aus der Gruppe von Kupfer, Silber, Cadmium, Platin, Palladium, Rhodium, Zink, Quecksilber, Titan, Zirkonium und/oder Aluminium sowie deren Ionen und/oder Salzen, bevorzugt Kupfer oder Silber sowie deren Ionen und/oder deren Salzen, ausgebildet.

In erfindungsgemäß bevorzugter Weise ist die katalytisch aktive Komponente auf Basis eines Metalls oder einer Metallverbindung, vorzugsweise einer anorganischen Metallverbindung, besonders bevorzugt auf Basis eines Metalloxids, ausgebildet. Gleichermaßen ist es möglich, verschiedene Metalle bzw. verschiedene Metallverbindungen miteinander zu kombinieren, und zwar entweder in derselben Trägerschicht oder aber in getrennten Trägerschichten. Gemäß einer erfindungsgemäß besonders bevorzugten Ausführungsform ist die katalytisch aktive Komponente ausgewählt aus Silber und/oder Kupfer, insbesondere in metallischer Form und/oder in ionischer, vorzugsweise oxidischer Form. Erfindungsgemäß ganz besonders bevorzugt ist die katalytisch aktive Komponente ausgewählt aus der Gruppe Ag, Ag₂O, Cu, Cu₂O und CuO sowie deren Mischungen.

Die erfindungsgemäß eingesetzte katalytisch aktive Komponente ist derart ausgewählt, daß sie beim Lagern unter üblichen Bedingungen ihre katalytische Aktivität mindestens fünf Jahre, vorzugsweise mindestens zehn Jahre, beibehält. Des weiteren sollte die katalytisch aktive Komponente auch oberhalb von 80 °C über einen definierten Zeitraum stabil bzw. lagerstabil sein. Diese Voraussetzung ist bei den vorgenannten Verbindungen, insbesondere auf Basis von Silber und/oder Kupfer, erfüllt.

Die eingesetzte Menge an katalytisch aktiver Komponente kann in weiten Bereichen variieren. Im allgemeinen wird die katalytisch aktive Komponente, bezogen auf die erste und/oder zweite äußere Trägerschicht, in Mengen von 0,001 bis 20 Gew.-%, insbesondere 0,005 bis 10 Gew.-%, vorzugsweise 0,01 bis 5 Gew.-%, eingesetzt. Bezogen auf das Adsorptionsfiltermaterial insgesamt, fallen die Mengen an eingesetzter katalytisch aktiver Komponente selbstverständlich geringer aus: Im allgemeinen wird die katalytisch aktive Komponente, bezogen auf das Adsorptionsfiltermaterial insgesamt, in Mengen von 0,0001 bis 10 Gew.-%, insbesondere 0,001 bis 5 Gew.-%, vorzugsweise 0,002 bis 2 Gew.-%, eingesetzt. Dennoch kann es erfindungsgemäß vorgesehen sein, anwendungsbezogen oder einzelfallbedingt von den vorgenannten Mengen abzuweichen, ohne daß der Rahmen der vorliegenden Erfindung verlassen ist.

Was die erste äußere Trägerschicht anbelangt, so kann diese zumindest im wesentlichen flächig bzw. zumindest im wesentlichen zweidimensional ausgebildet sein. Insbesondere ist die erste äußere Trägerschicht als ein textiles Flächengebilde, z. B. ein Gewebe, ein Gewirke, ein Gestricke, ein Gelege, ein Textilverbundstoff (z. B. ein Vlies) oder ein Non-Woven ausgebildet. Im allgemeinen besitzt das textile Flächengebilde der ersten äußere Trägerschicht ein Flächengewicht von 10 bis 150 g/m², insbesondere 10 bis 100 g/m², vorzugsweise 15 bis 75 g/m², besonders bevorzugt 20 bis 60 g/m², ganz besonders bevorzugt 25 bis 50 g/m².

Was die zweite äußere Trägerschicht anbelangt, so ist auch diese im allgemeinen zumindest im wesentlichen flächig bzw. zumindest im wesentlichen zweidimensional ausgebildet. Insbesondere ist die zweite äußere Trägerschicht als ein textiles Flächengebilde ausgebildet, insbesondere als ein Gewebe, Gewirke, Gestricke, Gelege, Textilverbundstoff (z. B. Vlies) oder Non-Woven, wobei das textile Flächengebilde der zweiten äußeren Trägerschicht im allgemeinen ein Flächengewicht von 10 bis 150 g/m², insbesondere 40 bis 120 g/m², vorzugsweise 60 bis 120 g/m², aufweist.

Grundsätzlich können für die Ausbildung der ersten und zweiten äußeren Trägerschicht identische Materialien eingesetzt werden. Im allgemeinen ist es aber bevorzugt, unterschiedliche Materialien einzusetzen, insbesondere textile Flächengebilde mit unterschiedlichen Flächengewichten und/oder unterschiedlichen Fasern und/oder unterschiedlichen Eigenschaften.

Beispielsweise kann die erste und/oder zweite äußere Trägerschicht als ein aus Natur- und/oder Chemiefasern, vorzugsweise Chemiefasern, bestehendes textiles Flächengebilde ausgebildet sein.

Erfindungsgemäß bevorzugt ist die erste und/oder zweite äußere Trägerschicht als ein textiles Flächengebilde mit oder aus Natur- und/oder Chemiefasern, vorzugsweise Chemiefasern, bevorzugt aus der Gruppe von Polyamiden, Polyestern, Polyolefinen, Polyurethanen, Polyvinyl (z. B. Polyvinylalkoholen) und/oder Polyacryl, ausgebildet.

Wie zuvor beschrieben, ist die erste und/oder zweite äußere Trägerschicht als textiles Flächengebilde ausgebildet. Dabei ist die katalytisch aktive Komponente im allgemeinen in die Trägerschicht bzw. in das textile Flächengebilde der betreffenden Trägerschicht, insbesondere in die das Flächengebilde bildenden Fasern, Fäden, Garne, Filamente oder dergleichen, eingearbeitet bzw. inkorporiert bzw. dauerhaft hiermit verbunden. Je nach chemischer Natur der Fasern, Fäden, Garne, Filamente oder dergleichen, kann das Einarbeiten bzw. die Inkorporierung der katalytisch aktiven Komponente durch unterschiedliche Verfahren erfolgen, so z. B. durch Einspinnen, Extrudieren, Imprägnierverfahren, chemische Behandlungsverfahren (z. B. durch Imprägnierung mit nachfolgender Oxidation/Reduktion), plasmachemische Behandlungsverfahren (z. B. durch Aufsputtern) oder dergleichen. Dies ist dem Fachmann aus dem Stand der Technik hinlänglich bekannt.

Grundsätzlich können die erste und/oder zweite äußere Trägerschicht, insbesondere die im Gebrauchszustand der Schadstoffquelle zugewandte Trägerschicht, außerdem mit einer hydrophilen oder hydrophoben Ausstattung versehen sein. Im allgemeinen weist die erste und/oder zweite äußere Trägerschicht eine Querschnittsdicke von 0,05 bis 5 mm, vorzugsweise 0,1 bis 1 mm, insbesondere 0,2 bis 0,5 mm, auf. Des weiteren besitzt die erste und/oder zweite äußere Trägerschicht im allgemeinen eine gute Gas- bzw. Luftdurchlässigkeit, insbesondere von mindestens 1.000 l·m⁻²·s⁻¹, insbesondere mindestens 2.000 l·m⁻²·s⁻¹, vorzugsweise mindestens 3.000 l·m⁻²·s⁻¹, besonders bevorzugt mindestens 3.500 l·m⁻²·s⁻¹, bei einem Strömungswiderstand von 127 Pascal.

Beispielsweise kann - rein veranschaulichend - in bezug auf die permanente Ausstattung bzw. Ausrüstung von textilen Flächenmaterialien mit biozid bzw. biostatisch wirkenden, katalytisch aktiven Komponenten und den diesbezüglichen Herstellprozeß auf die nachfolgenden Druckschriften verwiesen werden; WO 01/74166 A1 bzw. hieraus hervorgehendes Europa-Patent EP 1 272 037 B1, WO 98/06508 A1, WO 98/06509 A1, US 2005/0049370 A1, US 2003/0198945 A1, US 2005/0048131 A1, WO 00/75415 A1, WO 01/81671 A2 und WO 03/086478 A1.

Erfindungsgemäß geeignete, mit einer biostatisch bzw. biozid wirkenden katalytisch aktiven Komponente beaufschlagte textile Flächengebilde, welche im Rahmen der vorliegenden Erfindung als äußere Trägerschichten zum Einsatz kommen können, sind im übrigen auch kommerziell erhältlich, z. B. von den Firmen Cupron Corporation, New York (USA), Foss Manufacturing Company Inc., Hampton, New Hampshire (USA) oder Noble Fiber Technologies, Clarks Summit, Pennsylvania (USA).

Wie zuvor beschrieben, ist das erfindungsgemäße Adsorptionsfiltermaterial gasdurchlässig, insbesondere luftdurchlässig, und/oder wasserdurchlässig und/oder wasserdampfdurchlässig ausgebildet. Hierdurch wird bei der Verarbeitung zu ABC-Schutzanzügen ein hervorragender Tragekomfort erreicht.

Im allgemeinen weist das erfindungsgemäße Adsorptionsfiltermaterial bei einem Strömungswiderstand von 127 Pascal eine Gas- bzw. Luftdurchlässigkeit von mindestens 50 l·m⁻² ·s⁻¹, insbesondere mindestens 100 l·m⁻² ·s⁻¹, vorzugsweise mindestens 200 l·m⁻² ·s⁻¹, besonders bevorzugt mindestens 500 l·m⁻²·s⁻¹, ganz besonders bevorzugt mindestens 600 l·m⁻²·s⁻¹, und/oder bis zu 10.000 l·m⁻²·s⁻¹ auf.

Im allgemeinen besitzt das erfindungsgemäße Adsorptionsfiltermaterial ein Gesamtflächengewicht von 150 bis 1.000 g/m², insbesondere 200 bis 800 g/m², vorzugsweise 250 bis 600 g/m², besonders bevorzugt 300 bis 500 g/m², insbesondere bei einer Gesamtquerschnittsdicke des erfindungsgemäßen Adsorptionsfiltermaterial von 0,1 bis 10 mm, insbesondere 0,2 bis 5 mm, bevorzugt 0,5 bis 1,0 mm.

Zur Erhöhung des Tragekomforts bei der Verarbeitung zu ABC-Schutzbekleidung sollte das erfindungsgemäße Adsorptionsfiltermaterial eine Wasserdampfdurchgangsrate von mindestens 5 l/m² pro 24 h, insbesondere mindestens 10 l/m² pro 24 h, vorzugsweise mindestens 15 l/m² pro 24 h, besonders bevorzugt mindestens 20 l/m² pro 24 h, ganz besonders bevorzugt mindestens 25 l/m² pro 24 h, aufweisen.

Um eine gute Schutzwirkung zu gewährleisten, weist das erfindungsgemäß Adsorptionsfiltermaterial im allgemeinen eine Barrierewirkung gegenüber chemischen Kampfstoffen, insbesondere Bis[2-chlorethyl]sulfid (synonym auch Senfgas, Lost oder Gelbkreuz genannt), bestimmt nach Methode 2.2 der CRDEC-SP-84010, von höchstens 4 µg/cm² pro 24 h, insbesondere höchstens 3,5 µg/cm² pro 24 h, vorzugsweise höchstens 3,0 µg/cm² pro 24 h, besonders bevorzugt höchstens 2,5 µg/cm² pro 24 h, auf.

Weitere Vorteile, Eigenschaften, Aspekte und Merkmale der vorliegenden Erfindung ergeben sich aus der folgenden Beschreibung eines in den Figuren dargestellten Ausführungsbeispiels. Es zeigt:

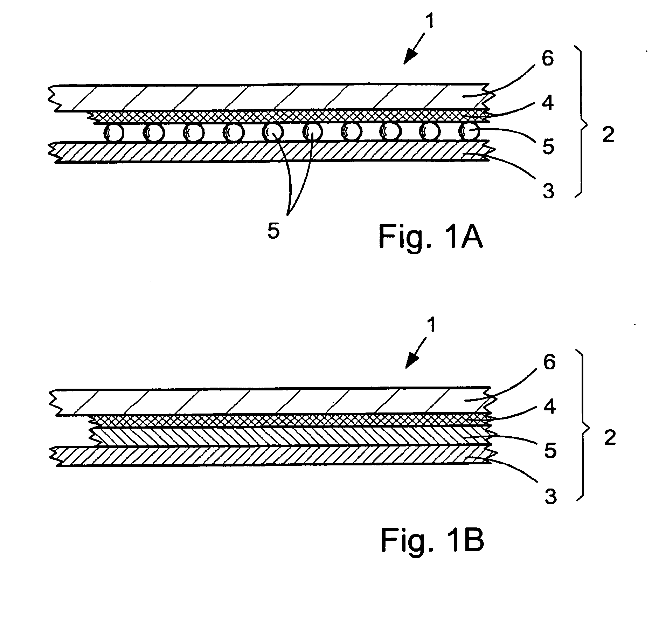

- Fig. 1A: eine schematische Schnittdarstellung durch den Schichtaufbau eines erfindungsgemäßen Adsorptionsfiltermaterials gemäß einer Ausführungsform der vorliegenden Erfindung, wonach die Adsorptionsschicht aus diskreten Adsorberteilchen, insbesondere Aktivkohlepartikeln, gebildet ist; und
- Fig. 1B: eine schematische Schnittdarstellung durch den Schichtaufbau eines erfindungsgemäßen Adsorptionsfiltermaterials gemäß einer alternativen Ausführungsform der vorliegenden Erfindung, wonach die Adsorptionsschicht aus einem adsorptiven Flächengebilde, insbesondere einem Aktivkohlefaserflächengebilde, gebildet ist.

Fig. 1A und 1B zeigen eine schematische Schnittdarstellung durch den Schichtaufbau 2 eines erfindungsgemäßen Adsorptionsfiltermaterials 1 entsprechend einer speziellen Ausgestaltung. Das Adsorptionsfiltermaterial 1 nach der vorliegenden Erfindung, welches mit sowohl mit biologischer als auch mit chemischer Schutzfunktion, insbesondere mit Schutzfunktion gegenüber chemischen wie biologischen Giften und Schadstoffen, wie chemischen und biologischen Kampfstoffen, ausgerüstet ist, weist einen mehrschichtigen Aufbau 2 mit einer ersten äußeren Trägerschicht 3 und einer zweiten äußeren Trägerschicht 4 und einer zwischen den beiden Trägerschichten 3, 4 angeordneten Adsorptionsschicht 5 auf. Die erste äußere Trägerschicht 3 und/oder die zweite äußere Trägerschicht 4, vorzugsweise die zweite äußere Trägerschicht 4, ist mit einer katalytisch aktiven Komponente beaufschlagt (nicht dargestellt). Auf die zweite äußere Trägerschicht ist zudem eine Oberschicht 6 aufgebracht. Zu den mechanischen, physikalischen und/oder chemischen Eigenschaften der vorgenannten Schichten bzw. Lagen kann auf die obigen Ausführungen verwiesen werden, die in bezug auf die spezielle Ausgestaltung entsprechend gelten.

Während die Schicht 3 bzw. 4 mit der katalytisch aktiven Komponente insbesondere gegenüber biologischen Schadstoffen (z. B. Mikroorganismen, wie Bakterien, Viren oder Pilzen und dergleichen) wirkt, aber gegebenenfalls auch bereits einen Teil der chemischen Schadstoffe bzw. Gifte katalytisch unschädlich machen oder aber zersetzen kann, bewirkt die Adsorptionsschicht 5 eine Adsorption bzw. ein Unschädlichmachen überwiegend von chemischen Giften bzw. Schadstoffen, aber gegebenenfalls auch von einem Teil der biologische Giftstoffe.

Während Fig. 1A eine Ausführungsform der vorliegenden Erfindung zeigt, wonach die Adsorptionsschicht 5 aus diskreten Adsorberteilchen, insbesondere Aktivkohlepartikeln (z. B. Aktivkohlekügelchen), gebildet ist, zeigt Fig. 1B eine alternative Ausführungsform der vorliegenden Erfindung, wonach die Adsorptionsschicht 5 aus einem adsorptiven Flächengebilde, insbesondere einem Aktivkohlefaserflächengebilde, gebildet ist.

Weiterer Gegenstand der vorliegenden Erfindung ist die Verwendung des erfindungsgemäßen Adsorptionsfiltermaterials, wie zuvor beschrieben, zur Herstellung von Schutzmaterialien aller Art, insbesondere von Schutzbekleidung, insbesondere für den zivilen oder militärischen Bereich, wie Schutzanzügen, Schutzhandschuhe, Schutzschuhwerk, Schutzsocken, Kopfschutzbekleidung und dergleichen, sowie von Schutzabdeckungen aller Art, wobei alle vorgenannten Schutzmaterialien vorzugsweise für den ABC-Einsatz bestimmt sind.

Weiterhin ist Gegenstand der vorliegenden Erfindung die Verwendung des erfindungsgemäßen Adsorptionsfiltermaterials, wie zuvor beschrieben, zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähige Trägerstrukturen und Filtern für den medizinischen Bereich.

Außerdem sind Gegenstand der vorliegenden Erfindung die vorgenannten Schutzmaterialien aller Art selbst, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, welche unter Verwendung des erfindungsgemäßen Adsorptionsfiltermaterials hergestellt bzw. das erfindungsgemäße Adsorptionsfiltermaterial aufweisen, wobei alle vorgenannten Schutzmaterialien vorzugsweise für den ABC-Einsatz bestimmt sind.

Schließlich sind weiterer Gegenstand der vorliegenden Erfindung Filter und Filtermaterialien aller Art, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, welche unter Verwendung des erfindungsgemäßen Materials hergestellt sind bzw. das erfindungsgemäße Adsorptionsfiltermaterial aufweisen.

Für weitere Einzelheiten zu den zuvor beschriebenen erfindungsgemäßen Verwendungen und zu den zuvor beschriebenen erfindungsgemäßen Gegenstände kann Bezug genommen werden auf die obigen Ausführungen zu dem erfindungsgemäßen Adsorptionsfiltermaterial, welche in bezug auf die erfindungsgemäßen Verwendungen und die erfindungsgemäßen Gegenstände entsprechend gelten.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand des nachfolgenden Ausführungsbeispiels veranschaulicht, welches die vorliegende Erfindung jedoch keinesfalls beschränken soll.

### AUSFÜHRUNGSBEISPIEL:

Es wird ein erfindungsgemäßes Adsorptionsfiltermaterial hergestellt. Zu diesem Zweck wird eine erste Trägerschicht, welche kommerziell von der Fa. Cupron Corporation, New York (USA), erhältlich ist, mit einem Flächengewicht von 25 g/m² (0,3 mm Dicke), welches mit 3 Gew.-% (d. h. 0,75 g/m²) einer Kupferverbindung, berechnet als Kupfer, beaufschlagt ist und eine Luftdurchlässigkeit - bei einem Strömungswiderstand von 127 Pascal - von 4.240 l·m⁻²·s⁻¹ aufweist mit Aktivkohlekügelchen mit einer Auflagemenge von 180 g/m² mittels Verklebung beaufschlagt und die Adsorptionsschicht auf der der ersten Trägerschicht abgewandten Seite mit einer zweiten Trägerschicht versehen. Es resultiert ein erfindungsgemäßes Adsorptionsfiltermaterial mit einem Gesamtflächengewicht von 355 g/m² und einer Gesamtdicke (Querschnitt) von 0,9 mm und mit einer Luftdurchlässigkeit - bei einem Strömungswiderstand von 127 Pascal - von 680 l·m⁻²·s⁻¹. Der Kupferanteil, bezogen auf das gesamte Adsorptionsfiltermaterial, beträgt somit ca. 0,002 Gew.-%, berechnet als Kupfer. Als Kupferkomponente dient eine Mischung aus Cu₂O und CuO.

Als Vergleichsmaterial dient ein identisch aufgebautes Adsorptionsfiltermaterial mit der Abweichung, daß die erste Trägerschicht nicht mit einer katalytisch aktiven Komponente beaufschlagt ist, sondern stattdessen eine mit einer Kupferverbindung imprägnierte Aktivkohle eingesetzt wird, wobei der Kupferanteil, berechnet als Kupfer, im Vergleich zu dem erfindungsgemäßen Adsorptionsfiltermaterial doppelt so hoch ist und somit ca. 0,004 Gew.-%, bezogen auf das gesamte Vergleichsadsorptionsfiltermaterial, beträgt.

Bei dem erfindungsgemäßen Adsorptionsfiltermaterial einerseits und dem Vergleichsadsorptionsfiltermaterial andererseits werden die jeweiligen Barrierewirkungen gegenüber Senfgas und Soman gemäß Methode 2.2 der CRDEC-SP-84010 im Rahmen des sogenannten konvektiven Strömungstests (*convective flow test*) bestimmt. Zu diesem Zweck läßt man bei konstantem Strömungswiderstand mit einer Strömungsgeschwindigkeit von ca. 0,45 cm/s einen Senfgas bzw. Soman enthaltenden Luftstrom auf das Adsorptionsfiltermaterial einwirken und bestimmt die flächenbezogene Durchbruchmenge nach 16 Stunden (80 % relative Luftfeuchtigkeit, 32 °C, 10 · 1 µl HD/12,56 cm², bzw. 12 · 1 µl GD/12,56 cm²).

Bei dem erfindungsgemäßen Adsorptionsfiltermaterial wird ein Durchbruch in bezug auf Senfgas von nur 1,11 µg/cm² bzw. 1,91 µg/cm² und in bezug auf Soman von nur 1,91 µg/cm² bzw. 1,75 µg/cm² bestimmt, wohingegen bei dem Vergleichsadsorptionsfiltermaterial die bestimmten Werte deutlich höher liegen und sowohl im Falle von Senfgas als auch im Falle von Soman oberhalb von 5 µg/cm² liegen und somit nicht akzeptabel sind.

Bei Untersuchungen des erfindungsgemäßen Adsorptionsfiltermaterials in bezug auf die Schutzwirkung gegenüber Mikroorganismen werden gleichermaßen exzellente Ergebnisse erhalten: Bei Versuchen zur Überprüfung der biostatischen Eigenschaften nach ASTM E2149-01 mit *Klebsiella pneumoniae* bzw. *Staphylococcus aureus* (jeweils 1,5 - 3,0 x 10⁵ CFU/ml) liegt die prozentuale Reduktion in bezug auf diese Erreger nach 24 Stunden bei dem erfindungsgemäßen Adsorptionsfiltermaterial in beiden Fällen oberhalb von 99 %, wohingegen im Falle des Vergleichsmaterials diese Werte bei nur 63 % bzw. 71 % liegen. Dies zeigt, daß auch die biologische Schutzfunktion des erfindungsgemäßen Adsorptionsfiltermaterials verbessert ist.

Die vorstehenden Tests zeigen die verbesserte Leistungsfähigkeit des erfindungsgemäßen Adsorptionsfiltermaterials mit der katalytisch aktiven Komponente in der Trägerschicht gegenüber dem Vergleichsadsorptionsfiltermaterial, bei dem die katalytisch aktive Komponente in der Adsorptionsschicht vorliegt, d. h. die Aktivkohle mit dem Katalysator imprägniert ist.

Vergleichbare Ergebnisse werden mit einem erfindungsgemäßen Adsorptionsfiltermaterial erhalten, bei dem anstelle der Kupferverbindung Silber bzw. Silberoxid eingesetzt wird.

## Patentansprüche

1. Adsorptionsfiltermaterial mit biologischer und chemischer Schutzfunktion, insbesondere mit Schutzfunktion gegenüber chemischen wie biologischen Giften und Schadstoffen, wie chemischen und biologischen Kampfstoffen, wobei das Adsorptionsfiltermaterial einen mehrschichtigen Aufbau mit einer ersten äußeren Trägerschicht und einer zweiten äußeren Trägerschicht und einer zwischen den beiden Trägerschichten angeordneten Adsorptionsschicht aufweist, wobei das Adsorptionsfiltermaterial außerdem mindestens eine katalytisch aktive Komponente umfaßt,
**dadurch gekennzeichnet,**
**daß** die erste äußere Trägerschicht und/oder die zweite äußere Trägerschicht mit der katalytisch aktiven Komponente beaufschlagt ist/sind.

2. Adsorptionsfiltermaterial nach Anspruch 1, **dadurch gekennzeichnet, daß** die Adsorptionsschicht an der ersten äußeren Trägerschicht und/oder an der zweiten äußeren Trägerschicht befestigt ist, insbesondere mittels Verkleben, und/oder daß die Adsorptionsschicht mit der ersten äußeren Trägerschicht und/oder mit der zweiten äußeren Trägerschicht, vorzugsweise mit der ersten äußeren Trägerschicht und mit der zweiten äußeren Trägerschicht, verbunden, insbesondere verklebt, ist.

3. Adsorptionsfiltermaterial nach Anspruch 1 oder 2, **dadurch gekennzeichnet, daß** die Adsorptionsschicht auf Basis von Aktivkohle ausgebildet ist und/oder daß die Adsorptionsschicht Aktivkohle aufweist oder hieraus besteht, insbesondere wobei die Aktivkohle in Form von Aktivkohleteilchen und/oder Aktivkohlefasern vorliegt, und/oder daß die Adsorptionsschicht diskrete Aktivkohleteilchen, vorzugsweise in Kornform ("Kornkohle") oder Kugelform ("Kugelkohle"), umfaßt oder hieraus besteht.

4. Adsorptionsfiltermaterial nach einem oder mehreren der vorangehenden Ansprüche, **dadurch gekennzeichnet, daß** die Adsorptionsschicht Aktivkohlefasem, insbesondere in Form eines Aktivkohleflächengebildes, umfaßt oder hieraus besteht.

5. Adsorptionsfiltermaterial nach einem oder mehreren der vorangehenden Ansprüche, **dadurch gekennzeichnet, daß** die katalytisch aktive Komponente eine biostatische und/oder biozide Wirkung, insbesondere eine bakteriostatische oder bakterizide und/oder virustatische oder viruzide und/oder fungistatische oder fungizide Wirkung, aufweist und/oder daß die katalytisch aktive Komponente auf Basis eines Metalls oder einer Metallverbindung, insbesondere aus der Gruppe von Kupfer, Silber, Cadmium, Platin, Palladium, Rhodium, Zink, Quecksilber, Titan, Zirkonium und/oder Aluminium sowie deren Ionen und/oder Salzen, bevorzugt Kupfer und Silber sowie deren Ionen und/oder Salzen, ausgebildet ist.

6. Adsorptionsfiltermaterial nach einem oder mehreren der vorangehenden Ansprüche, **dadurch gekennzeichnet, daß** die katalytisch aktive Komponente auf Basis eines Metall oder einer vorzugsweise anorganischen Metallverbindung, bevorzugt eines Metalloxids, ausgebildet ist und/oder daß die katalytisch aktive Komponente ausgewählt ist aus Silber und/oder Kupfer, insbesondere in metallischer Form und/oder in ionischer, vorzugsweise oxidischer Form, besonders bevorzugt aus der Gruppe von Ag, Ag₂O, Cu, Cu₂O und CuO sowie deren Mischungen.

7. Adsorptionsfiltermaterial nach einem oder mehreren der vorangehenden Ansprüche, **dadurch gekennzeichnet, daß** die Menge an katalytisch aktiver Komponente, bezogen auf die erste und/oder zweite äußere Trägerschicht, 0,001 bis 20 Gew.-%, insbesondere 0,005 bis 10 Gew.-%, vorzugsweise 0,01 bis 5 Gew.-%, beträgt und/oder daß die Menge an katalytisch aktiver Komponente, bezogen auf das Adsorptionsfiltermaterial, 0,0001 bis 10 Gew.-%, insbesondere 0,001 bis 5 Gew.-%, vorzugsweise 0,002 bis 2 Gew.-%, beträgt.

8. Adsorptionsfiltermaterial nach einem oder mehreren der vorangehenden Ansprüche, **dadurch gekennzeichnet, daß** die erste äußere Trägerschicht zumindest im wesentlichen flächig bzw. zumindest im wesentlichen zweidimensional ausgebildet ist und/oder daß die erste äußere Trägerschicht ein textiles Flächengebilde ist, insbesondere wobei das textile Flächengebilde ein Gewebe, Gewirke, Gestricke, Gelege, Textilverbundstoff, Vlies oder Non-Woven ist und/oder insbesondere wobei das textile Flächengebilde ein Flächengewicht von 10 bis 150 g/m², insbesondere 10 bis 100 g/m², vorzugsweise 15 bis 75 g/m², besonders bevorzugt 20 bis 60 g/m², ganz besonders bevorzugt 25 bis 50 g/m², aufweist.

9. Adsorptionsfiltermaterial nach einem oder mehreren der vorangehenden Ansprüche, **dadurch gekennzeichnet, daß** die zweite äußere Trägerschicht zumindest im wesentlichen flächig bzw. zumindest im wesentlichen zweidimensional ausgebildet ist und/oder daß die zweite äußere Trägerschicht ein textiles Flächengebilde ist, insbesondere wobei das textile Flächengebilde ein Gewebe, Gewirke, Gestricke, Gelege, Textilverbundstoff, Vlies oder Non-Woven ist und/oder insbesondere wobei das textile Flächengebilde ein Flächengewicht von 10 bis 150 g/m², insbesondere 40 bis 120 g/m², vorzugsweise 60 bis 120 g/m², aufweist.

10. Adsorptionsfiltermaterial nach einem oder mehreren der vorangehenden Ansprüche, **dadurch gekennzeichnet, daß** die erste und/oder zweite äußere Trägerschicht ein aus Natur- und/oder Chemiefasern, vorzugsweise Chemiefasern, bestehendes textiles Flächengebilde ist/sind und/oder daß die erste und/oder zweite äußere Trägerschicht ein textiles Flächengebilde mit oder aus Natur- und/oder Chemiefasern, vorzugsweise Chemiefasern, bevorzugt aus der Gruppe von Polyamiden, Polyestern, Polyolefinen, Polyurethanen, Polyvinyl und/oder Polyacryl, ist.

11. Adsorptionsfiltermaterial nach einem oder mehreren der vorangehenden Ansprüche, **dadurch gekennzeichnet, daß** die erste und/oder zweite äußere Trägerschicht als textiles Flächengebilde ausgebildet ist/sind, wobei die katalytisch aktive Komponente in das textile Flächengebilde, insbesondere in die das Flächengebilde bildenden Fasern, Fäden, Garne, Filamente oder dergleichen, eingearbeitet und/oder inkorporiert ist, insbesondere durch Einspinnen, Extrudieren, Imprägnierverfahren, chemische oder plasmachemische Behandlungsverfahren oder dergleichen.

12. Adsorptionsfiltermaterial nach einem oder mehreren der vorangehenden Ansprüche, **dadurch gekennzeichnet, daß** das Adsorptionsfiltermaterial gasdurchlässig, insbesondere luftdurchlässig, und/oder wasserdurchlässig und/oder wasserdampfdurchlässig ausgebildet ist und/oder daß das Adsorptionsfiltermaterial ein Gesamtflächengewicht von 150 bis 1.000 g/m², insbesondere 200 bis 800 g/m², vorzugsweise 250 bis 600 g/m², besonders bevorzugt 300 bis 500 g/m², aufweist und/oder daß das Adsorptionsfiltermaterial gasdurchlässig, insbesondere luftdurchlässig, ist, insbesondere wobei die Gas- bzw. Luftdurchlässigkeit des Adsorptionsfiltermaterials mindestens 501•m⁻²•s⁻¹, insbesondere mindestens 100 l•m⁻²•s⁻¹, vorzugsweise mindestens 200 l•m⁻²•s⁻¹, besonders bevorzugt mindestens 500 l•m⁻²•s⁻¹, ganz besonders bevorzugt mindestens 600 l•m⁻²•s⁻¹, und/oder bis zu 10.000 l•m⁻²•s⁻¹ bei einem Strömungswiderstand von 127 Pa beträgt, und/oder daß das Adsorptionsfiltermaterial eine Wasserdampfdurchgangsrate von mindestens 5 l/m² pro 24 h, insbesondere mindestens 10 1/m² pro 24 h, vorzugsweise mindestens 15 1/m² pro 24 h, besonders bevorzugt mindestens 20 1/m² pro 24 h, ganz besonders bevorzugt mindestens 25 l/m² pro 24 h, aufweist und/oder daß das Adsorptionsfiltermaterial eine Gesamtquerschnittsdicke von 0,1 bis 10 mm, insbesondere 0,2 bis 1,5 mm, bevorzugt 0,5 bis 1,0 mm, aufweist.

13. Adsorptionsfiltermaterial nach einem oder mehreren der vorangehenden Ansprüche, **dadurch gekennzeichnet, daß** das Adsorptionsfiltermaterial eine Barrierewirkung gegenüber chemischen Kampfstoffen, insbesondere Bis[2-chlorethyl]sulfid (Senfgas, Lost, Gelbkreuz), bestimmt nach Methode 2.2 der CRDEC-SP-84010, von höchstens 4 µg/cm² pro 24 h, insbesondere höchstens 3,5 µg/cm² pro 24 h, vorzugsweise höchstens 3,0 µg/cm² pro 24 h, besonders bevorzugt höchstens 2,5 µg/cm² pro 24 h, aufweist.

14. Verwendung eines Adsorptionsfiltermaterials nach einem der vorangehenden Ansprüche zur Herstellung von Schutzmaterialien aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz.

15. Verwendung eines Adsorptionsfiltermaterials nach einem der vorangehenden Ansprüche zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

16. Schutzmaterialien aller Art, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzmaterialien für den ABC-Einsatz, hergestellt unter Verwendung eines Adsorptionsfiltermaterials nach einem der vorangehenden Ansprüche und/oder aufweisend ein Adsorptionsfiltermaterial nach einem der vorangehenden Ansprüche.

17. Filter und Filtermaterialien aller Art, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung eines Adsorptionsfiltermaterials nach einem der vorangehenden Ansprüche und/oder aufweisend ein Adsorptionsfiltermaterial nach einem der vorangehenden Ansprüche.

## Claims

1. Adsorptive filtering material with biological and chemical protective function, in particular with protective function with regard to both chemical and biological poisons and noxiants, such as chemical and biological warfare agents, the adsorptive filtering material having a multilayered construction comprising a first outer supporting layer and a second outer supporting layer and an adsorptive layer disposed between the two supporting layers, the adsorptive filtering material further comprising at least one catalytically active component,
**characterized**
**in that** the first outer supporting layer and/or the second outer supporting layer is/are invested with the catalytically active component.

2. Adsorptive filtering material according to Claim 1, **characterized in that** the adsorptive layer is secured, in particular adhered, to the first outer supporting layer and/or to the second outer supporting layer, and/or **in that** the adsorptive layer is conjoined, in particular adhered, with the first outer supporting layer and/or with the second outer supporting layer, preferably with the first outer supporting layer and with the second outer supporting layer.

3. Adsorptive filtering material according to Claim 1 or 2, **characterized in that** the adsorptive layer is based on activated carbon and/or **in that** the adsorptive layer comprises or consists of activated carbon, in particular wherein the activated carbon is present in the form of activated carbon particles and/or activated carbon fibres, and/or **in that** the adsorptive layer comprises or consists of discrete particles of activated carbon, preferably in granule form ("granulocarbon") or spherical form ("spherocarbon").

4. Adsorptive filtering material according to one or more of the preceding claims, **characterized in that** the adsorptive layer comprises or consists of activated carbon fibres, in particular in the form of an activated carbon fabric.

5. Adsorptive filtering material according to one or more of the preceding claims, **characterized in that** the catalytically active component has a biostatic and/or biocidal effect, in particular a bacteriostatic or bactericidal and/or virustatic and/or virucidal and/or fungistatic or fungicidal effect, and/or **in that** the catalytically active component is based on a metal or a metal compound, in particular from the group consisting of copper, silver, cadmium, platinum, palladium, rhodium, zinc, mercury, titanium, zirconium and/or aluminium and also their ions and/or salts, preferably copper and silver and also their ions and/or salts.

6. Adsorptive filtering material according to one or more of the preceding claims, **characterized in that** the catalytically active component is based on a metal or a preferably inorganic metal compound, preferably a metal oxide, and/or **in that** the catalytically active component is selected from silver and/or copper, in particular in metallic form and/or in ionic, preferably oxidic form, more preferably from the group consisting of Ag, Ag₂O, Cu, Cu₂O and CuO and also their mixtures.

7. Adsorptive filtering material according to one or more of the preceding claims, **characterized in that** the amount of catalytically active component, based on the first and/or second outer supporting layer, is in the range from 0.001 % to 20 % by weight, in particular in the range from 0.005 % to 10 % by weight, and preferably in the range from 0.01 % to 5 % by weight, and/or **in that** the amount of catalytically active component, based on the adsorptive filtering material, is in the range from 0.0001 % to 10 % by weight, in particular in the range from 0.001 % to 5 % by weight, preferably in the range from 0.002 % to 2 % by weight.

8. Adsorptive filtering material according to one or more of the preceding claims, **characterized in that** the first outer supporting layer is at least essentially sheetlike or at least essentially two-dimensional, and/or **in that** the first outer supporting layer is a textile fabric, in particular wherein the textile fabric is a woven fabric, a knitted fabric, a laid fabric, a bonded fabric, a batt or a nonwoven, and/or in particular wherein the textile fabric has a basis weight in the range from 10 to 150 g/m², in particular in the range from 10 to 100 g/m², preferably in the range from 15 to 75 g/m², more preferably in the range from 20 to 60 g/m² and most preferably in the range from 25 to 50 g/m².

9. Adsorptive filtering material according to one or more of the preceding claims, **characterized in that** the second outer supporting layer is at least essentially sheetlike or at least essentially two-dimensional, and/or **in that** the second outer supporting layer is a textile fabric, in particular wherein the textile fabric is a woven fabric, a knitted fabric, a laid fabric, a bonded fabric, a batt or a nonwoven, and/or in particular wherein the textile fabric has a basis weight in the range from 10 to 150 g/m², in particular in the range from 40 to 120 g/m² and preferably in the range from 60 to 120 g/m².

10. Adsorptive filtering material according to one or more of the preceding claims, **characterized in that** the first and/or second outer supporting layer is/are a textile fabric consisting of natural and/or manufactured fibres, preferably manufactured fibres, and/or **in that** the first and/or second outer supporting layer is a textile fabric comprising or composed of natural and/or manufactured fibres, preferably manufactured fibres, preferably from the group consisting of polyamides, polyesters, polyolefins, polyurethanes, polyvinyl and/or polyacrylic.

11. Adsorptive filtering material according to one or more of the preceding claims, **characterized in that** the first and/or second outer supporting layer is/are configured as a textile fabric, the catalytically active component being included and/or incorporated in the textile fabric, in particular in the fibres, threads, yarns, filaments or the like forming the fabric, the inclusion and/or incorporation being in particular by spinning, extrusion, impregnation, chemical or plasma-chemical treating processes or the like.

12. Adsorptive filtering material according to one or more of the preceding claims, **characterized in that** the adsorptive filtering material is gas pervious, in particular air pervious, and/or water pervious and/or water vapour pervious and/or **in that** the adsorptive filtering material has an overall basis weight in the range from 150 to 1000 g/m², in particular in the range from 200 to 800 g/m², preferably in the range from 250 to 600 g/m² and more preferably in the range from 300 to 500 g/m², and/or **in that** the absorptive filtering material is gas pervious, in particular air pervious, in particular wherein the gas or air transmission rate of the adsorptive filtering material is at least 50 l·m⁻²·s⁻¹, in particular at least 100 l·m⁻²·s⁻¹, preferably at least 200 l·m⁻²·s⁻¹, more preferably at least 500 1·m⁻²·s⁻¹, most preferably at least 600 l·m⁻²·s⁻¹, and/or up to 10 000 1·m⁻²·s⁻¹ at a flow resistance of 127 Pa, and/or **in that** the adsorptive filtering material has a water vapour transmission rate of at least 5 l/m² per 24 h, in particular at least 10 1/m² per 24 h, preferably at least 15 l/m² per 24 h, more preferably at least 20 1/m² per 24 h and most preferably at least 25 l/m² per 24 h, and/or **in that** the adsorptive filtering material has an overall cross-sectional thickness in the range from 0.1 to 10 mm, in particular in the range from 0.2 to 1.5 mm and preferably in the range from 0.5 to 1.0 mm.

13. Adsorptive filtering material according to one or more of the preceding claims, **characterized in that** the adsorptive filtering material has a barrier effect with regard to chemical warfare agents, in particular bis-[2-chloroethyl]-sulphide (mustard gas, Hd, Yellow Cross), determined by method 2.2 of CRDEC-SP-84010, permitting permeation of not more than 4 µg/cm² per 24 h, in particular not more than 3.5 µg/cm² per 24 h, preferably not more than 3.0 µg/cm² per 24 h and more preferably not more than 2.5 µg/cm² per 24 h.

14. Use of an adsorptive filtering material according to any one of the preceding claims for production of protective materials of any kind, in particular of protective apparel, in particular for the civil or military sector, such as protective suits, protective gloves, protective shoewear, protective socks, protective headgear and the like, and of protective covers of any kind, preferably all aforementioned protective materials for NBC deployment.

15. Use of an adsorptive filtering material according to any one of the preceding claims for production of filters and filtering materials of any kind, in particular for removing noxiant, odorant and toxicant materials of any kind, in particular from air and/or gas streams, such as NBC protective mask filters, odour filters, sheet filters, air filters, in particular filters for indoor air cleaning, adsorption-capable supporting structures and filters for the medical sector.

16. Protective materials of any kind, in particular for the civil or military sector, in particular protective apparel, such as protective suits, protective gloves, protective shoewear, protective socks, protective headgear and the like, and of protective covers, preferably all aforementioned protective materials for NBC deployment, produced using an adsorptive filtering material according to any one of the preceding claims and/or comprising an adsorptive filtering material according to any one of the preceding claims.

17. Filters and filtering materials of any kind, in particular for removing noxiant, odorant and toxicant materials of any kind, in particular from air and/or gas streams, such as NBC protective mask filters, odour filters, sheet filters, air filters, in particular filters for indoor air cleaning, adsorption-capable supporting structures and filters for the medical sector, produced using an adsorptive filtering material according to any one of the preceding claims and/or comprising an adsorptive filtering material according to any one of the preceding claims.

## Revendications

1. Matériau filtrant à adsorption présentant une fonction de protection biologique et chimique, en particulier avec une fonction de protection contre des poisons et des substances nuisibles chimiques ainsi que biologiques, tels que des armes chimiques et biologiques, où le matériau filtrant à adsorption présente une structure à plusieurs couches avec une première couche support extérieure et une deuxième couche support extérieure et une couche d'adsorption disposée entre les deux couches support, le matériau filtrant à adsorption comprenant en outre au moins un composant catalytiquement actif,
**caractérisé**
**en ce que** la première couche support extérieure et/ou la deuxième couche support extérieure est/sont chargée(s) avec le composant catalytiquement actif.

2. Matériau filtrant à adsorption selon la revendication 1, **caractérisé en ce que** la couche d'adsorption est fixée sur la première couche support extérieure et/ou sur la deuxième couche support extérieure, en particulier par collage et/ou **en ce que** la couche d'adsorption est reliée, en particulier collée, avec la première couche support extérieure et/ou avec la deuxième couche support extérieure, de préférence avec la première couche support extérieure et avec la deuxième couche support extérieure.

3. Matériau filtrant à adsorption selon la revendication 1 ou 2, **caractérisé en ce que** la couche d'adsorption est réalisée à base de charbon actif et/ou **en ce que** la couche d'adsorption présente ou est constituée par du charbon actif, le charbon actif se trouvant en particulier sous forme de particules et/ou de fibres de charbon actif et/ou **en ce que** la couche d'adsorption comprend ou est constituée par des particules de charbon actif discrètes, de préférence sous forme de grains ("charbon granuleux") ou sous forme de billes ("charbon sphérique").

4. Matériau filtrant à adsorption selon l'une ou plusieurs des revendications précédentes, **caractérisé en ce que** la couche d'adsorption comprend ou est constituée par des fibres de charbon actif, en particulier sous forme d'une structure plane de charbon actif.

5. Matériau filtrant à adsorption selon l'une ou plusieurs des revendications précédentes, **caractérisé en ce que** le composant catalytiquement actif présente un effet biostatique et/ou biocide, en particulier un effet bactériostatique ou bactéricide et/ou virostatique ou virucide et/ou fongistatique ou fongicide et/ou **en ce que** le composant catalytiquement actif est réalisé à base d'un métal ou d'un composé métallique, en particulier du groupe formé par le cuivre, l'argent, le cadmium, le platine, le palladium, le rhodium, le zinc, le mercure, le titane, le zirconium et/ou l'aluminium ainsi que leurs ions et/ou sels, de préférence le cuivre et l'argent ainsi que leurs ions et/ou sels.

6. Matériau filtrant à adsorption selon l'une ou plusieurs des revendications précédentes, **caractérisé en ce que** le composant catalytiquement actif est à base d'un métal ou d'un composé métallique de préférence inorganique, de préférence d'un oxyde de métal et/ou **en ce que** le composant catalytiquement actif est choisi parmi l'argent et/ou le cuivre, en particulier sous forme métallique et/ou sous forme ionique, de préférence oxyde, de manière particulièrement préférée du groupe formé par Ag, Ag₂O, Cu, Cu₂O et CuO ainsi que leurs mélanges.

7. Matériau filtrant à adsorption selon l'une ou plusieurs des revendications précédentes, **caractérisé en ce que** la quantité de composant catalytiquement actif, par rapport à la première et/ou la deuxième couche support extérieure est de 0,001 à 20 % en poids, en particulier 0,005 à 10 % en poids, de préférence de 0,01 à 5 % en poids, et/ou **en ce que** la quantité de composant catalytiquement actif, par rapport au matériau filtrant à adsorption, est de 0,0001 à 10 % en poids, en particulier de 0,001 à 5 % en poids, de préférence de 0,002 à 2 % en poids.

8. Matériau filtrant à adsorption selon l'une ou plusieurs des revendications précédentes, **caractérisé en ce que** la première couche support extérieure est réalisée au moins essentiellement de manière plane ou au moins essentiellement de manière bidimensionnelle et/ou **en ce que** la première couche support extérieure est une structure plane textile, la structure plane textile étant en particulier un tissu, une étoffe, un tricot, une nappe, un matériau composite textile, un voile ou un non-tissé et/ou la structure plane textile présentant en particulier un poids surfacique de 10 à 150 g/m², en particulier de 10 à 100 g/m², de préférence de 15 à 75 g/m², de manière particulièrement préférée de 20 à 60 g/m², de manière tout particulièrement préférée de 25 à 50 g/m².

9. Matériau filtrant à adsorption selon l'une ou plusieurs des revendications précédentes, **caractérisé en ce que** la deuxième couche support extérieure est réalisée au moins essentiellement de manière plane ou au moins essentiellement de manière bidimensionnelle et/ou **en ce que** la deuxième couche support extérieure est une structure plane textile, la structure plane textile étant en particulier un tissu, une étoffe, un tricot, une nappe, un matériau composite textile, un voile ou un non-tissé et/ou la structure plane textile présentant en particulier un poids surfacique de 10 à 150 g/m², en particulier de 40 à 120 g/m², de préférence de 60 à 120 g/m².

10. Matériau filtrant à adsorption selon l'une ou plusieurs des revendications précédentes, **caractérisé en ce que** la première et/ou la deuxième couche support extérieure est/sont une structure plane textile en fibres naturelles et/ou chimiques, de préférence en fibres chimiques et/ou **en ce que** la première et/ou la deuxième couche support extérieure est/sont une structure plane textile avec ou constituée par des fibres naturelles et/ou chimiques, de préférence des fibres chimiques, de préférence du groupe des polyamides, des polyesters, des polyoléfines, des polyuréthanes, des polyvinyles et/ou des polyacryles.

11. Matériau filtrant à adsorption selon l'une ou plusieurs des revendications précédentes, **caractérisé en ce que** la première et/ou la deuxième couche support extérieure est/sont réalisée(s) sous forme de structure plane textile, le composant catalytiquement actif étant intégré et/ou incorporé dans la structure plane textile, en particulier dans les fibres, fils, fils à coudre, filaments ou analogues, formant la structure plane, en particulier par filage, extrusion, procédé d'imprégnation, procédé de traitement chimique ou chimique au plasma ou analogues.

12. Matériau filtrant à adsorption selon l'une ou plusieurs des revendications précédentes, **caractérisé en ce que** le matériau filtrant à adsorption est réalisé de manière perméable aux gaz, en particulier à l'air et/ou à l'eau et/ou à la vapeur d'eau et/ou **en ce que** le matériau filtrant à adsorption présente un poids surfacique total de 150 à 1000 g/m², en particulier de 200 à 800 g/m², de préférence de 250 à 600 g/m², de manière particulièrement préférée de 300 à 500 g/m² et/ou **en ce que** le matériau filtrant à adsorption est perméable aux gaz, en particulier à l'air, la perméabilité aux gaz ou à l'air du matériau filtrant à adsorption étant en particulier d'au moins 50 1 * m⁻² * s⁻¹, en particulier d'au moins 100 1 * m⁻² * s⁻¹, de préférence d'au moins 200 1 * m⁻² *s⁻¹, de manière particulièrement préférée d'au moins 500 l * m⁻² * s⁻¹, de manière tout particulièrement préférée d'au moins 600 1 * m⁻² * s⁻¹, et/ou jusqu'à 10 000 1 * m⁻² * s⁻¹ à une résistance à l'écoulement de 127 Pa, et/ou en ce que le matériau filtrant à adsorption présente un taux de perméation de la vapeur d'eau d'au moins 5 1/m² par 24 h, en particulier d'au moins 10 1/m² par 24 h, de préférence d'au moins 15 1/m² par 24 h, de manière particulièrement préférée d'au moins 20 1/m² par 24 h, de manière tout particulièrement préférée d'au moins 25 1/m² par 24 h et/ou **en ce que** le matériau filtrant à adsorption présente une épaisseur de section transversale de 0,1 à 10 mm, en particulier de 0,2 à 1,5 mm, de préférence de 0,5 à 1,0 mm.

13. Matériau filtrant à adsorption selon l'une ou plusieurs des revendications précédentes, **caractérisé en ce que** le matériau filtrant à adsorption présente un effet de barrière contre les armes chimiques, en particulier le sulfure de bis[2-chloroéthyle] (gaz moutarde, LOST, Gelbkreuz), déterminé selon la norme CRDEC-SP-84010, procédé 2.2, d'au plus 4 µg/cm² par 24 h, en particulier d'au plus 3,5 µg/cm² par 24 h, de préférence d'au plus 3,0 µg/cm² par 24 h, de manière particulièrement préférée d'au plus 2,5 µg/cm² par 24 h.

14. Utilisation d'un matériau filtrant à adsorption selon l'une quelconque des revendications précédentes pour la fabrication de matériaux de protection de tous types, en particulier de vêtements de protection, en particulier pour le domaine civil ou militaire, tels que des costumes de protection, des gants de protection, des chaussures de protection, des chaussettes de protection, un revêtement de protection pour la tête et analogues, et des recouvrements de protection de tous types, de préférence tous les matériaux de protection susmentionnés pour la protection CBRN.

15. Utilisation d'un matériau filtrant à adsorption selon l'une quelconque des revendications précédentes pour la fabrication de filtres et de matériaux filtrants de tous types, en particulier pour l'élimination de substances nuisibles, odorantes et de poisons de tous types, en particulier de flux d'air et/ou de gaz, tels que les filtres de masques de protection CBRN, les filtres d'odeurs, les filtres plats, les filtres à air, en particulier les filtres pour l'épuration de l'air ambiant, les structures support aptes à l'absorption et les filtres pour le domaine médical.

16. Matériaux de protection de tous types, en particulier pour le domaine civil ou militaire, en particulier vêtements de protection, tels que des costumes de protection, des gants de protection, des chaussures de protection, des chaussettes de protection, un revêtement de protection pour la tête et analogues, et des recouvrements de protection de tous types, de préférence tous les matériaux de protection susmentionnés pour la protection CBRN, fabriqués avec utilisation d'un matériau filtrant à adsorption selon l'une quelconque des revendications précédentes et/ou présentant un matériau filtrant à adsorption selon l'une quelconque des revendications précédentes.

17. Filtres et matériaux filtrants à adsorption de tous types, en particulier pour l'élimination de substances nuisibles, odorantes et de poisons de tous types, en particulier de flux d'air et/ou de gaz, tels que les filtres de masques de protection CBRN, les filtres d'odeurs, les filtres plats, les filtres à air, en particulier les filtres pour l'épuration de l'air ambiant, les structures support aptes à l'absorption et les filtres pour le domaine médical, fabriqués avec utilisation d'un matériau filtrant à adsorption selon l'une quelconque des revendications précédentes et/ou présentant un matériau filtrant à adsorption selon l'une quelconque des revendications précédentes.
